# FASCICULE DE BREVET EUROPEEN

(11) **EP 3 874 628 B1**
(45) Date de publication et mention de la délivrance du brevet: **14.02.2024**
(21) Numéro de dépôt: 19791271.0
(22) Date de dépôt: 25.10.2019
(51) Int. Cl.: H04B 17/21, H04B 7/08, H01Q 3/26

(54) **ÉQUIPEMENT ET PROCÉDÉ D'AUTO-ETALONNAGE D'UN RESEAU D'ANTENNES**
VORRICHTUNG UND VERFAHREN ZUR SELBSTKALIBRIERUNG EINER ANTENNENANORDNUNG
EQUIPMENT AND METHOD FOR SELF-CALIBRATION OF AN ANTENNA ARRAY

(30) Priorité: 29.10.2018 FR 1801144
(43) Date de publication de la demande: 08.09.2021
(73) Titulaire: SAFRAN ELECTRONICS & DEFENSE, 75015 Paris (FR)
(72) Inventeur: LILBERT, Arnaud, 92100 Boulogne Billancourt (FR)
(74) Mandataire: Cabinet Le Guen Maillet
(86) Numéro de dépôt international: PCT/EP2019/079289
(87) Numéro de publication internationale: WO 2020/089125

(56) Documents cités:
- US-A1- 2006 044 185
- US-B1- 6 665 545

## Description

### DOMAINE TECHNIQUE

La présente invention concerne le domaine technique des réseaux d'antennes pour traitement spatiotemporel. La présente invention concerne plus particulièrement un procédé d'auto-étalonnage d'un réseau d'antennes pour traitement spatiotemporel.

### ETAT DE LA TECHNIQUE ANTERIEURE

Un réseau d'antennes est un dispositif comportant une pluralité d'antennes radioélectriques distinctes, positionnées les unes par rapport aux autres de manière prédéterminée. Un réseau d'antennes peut servir pour recevoir un signal radioélectrique (ci-après signal radio), chaque antenne recevant ledit signal radio avec un déphasage et/ou une atténuation propre à sa position, et convertissant ledit signal radio en un signal électrique. La pluralité de signaux électriques issus du réseau d'antennes est transmise à un dispositif électronique adapté pour combiner ces signaux électriques. Il est alors possible de mettre en oeuvre des techniques dites de « formation de faisceaux » (ou aussi « filtrage spatial », « formation de voie » ou encore « beamforming » en anglais) afin de modifier un diagramme de rayonnement du réseau d'antennes dans une ou plusieurs directions. Il est ainsi possible d'atténuer fortement un gain du réseau d'antennes en direction d'une ou plusieurs sources de radio (technique dite de « nulling » en anglais) et/ou d'augmenter le gain du réseau d'antennes en direction d'autres sources de signaux radio (technique dite de « beamforming » ou « beammastering » en anglais).

Si un réseau d'antennes, grâce aux techniques de formation de faisceaux peut offrir des performances supérieures à une antenne isolée, ce réseau d'antennes nécessite toutefois d'être étalonné en gain et en phase afin de fonctionner de façon optimale.

A chaque antenne d'un réseau d'antennes est associé un ensemble de composants permettant de transmettre le signal électrique issu de l'antenne vers le dispositif électronique de combinaison des signaux électriques issus de la pluralité des antennes (ci-après, une unité de traitement). Cet ensemble de composants peut comprendre des filtres, amplificateurs, atténuateurs, mélangeurs ou tout autre composant électronique permettant de traiter un signal électrique. Cet ensemble de composants est appelé voie de réception. Ainsi, chaque antenne est connectée via une voie de réception associée au dispositif électronique de combinaison des signaux électriques ou unité de traitement. Les différents composants des voies de transmission peuvent être particulièrement dispersifs, par exemple pour cause de variabilité des caractéristiques d'un composant à un autre ou pour cause de variabilité selon la température d'utilisation d'un composant. Il est malgré tout nécessaire que les caractéristiques de gain et/ou de déphasage de chaque voie de réception soient les plus proches possibles afin d'optimiser la mise en oeuvre par l'unité de traitement des techniques de formation de faisceaux.

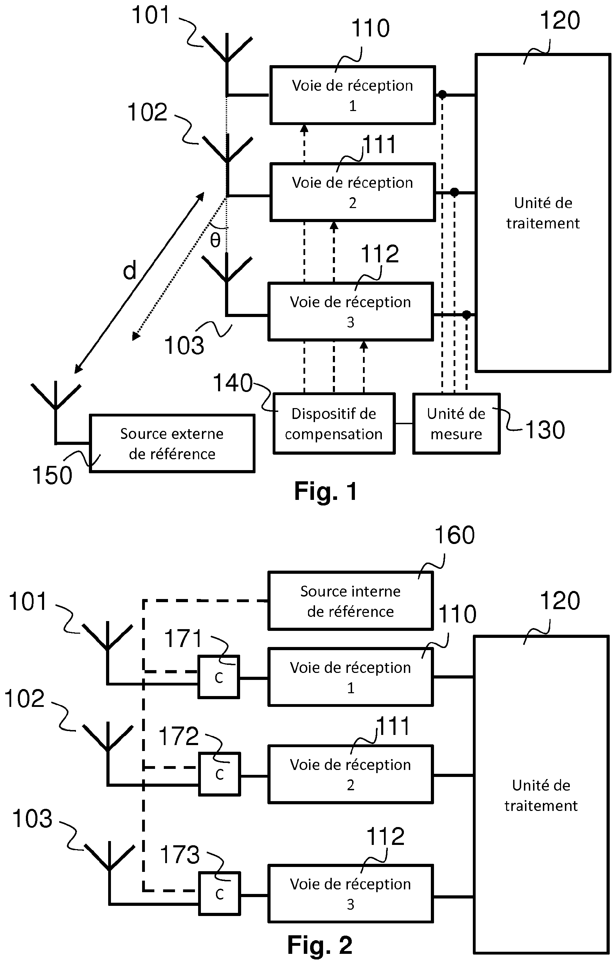

Une première solution connue à ce problème d'étalonnage d'un réseau d'antennes est illustrée dans la **Fig. 1****.** La Fig. 1 illustre schématiquement une solution fonctionnelle d'étalonnage d'un équipement comprenant un réseau d'antennes selon un premier mode de réalisation connu. Le réseau d'antennes comprend ici trois antennes 101, 102 et 103, la solution étant applicable à tout autre nombre différent d'antennes utilisées. L'antenne 101, respectivement l'antenne 102 ou 103, est connectée à l'unité de traitement 120 via une voie de réception 110, respectivement une voie de réception 111 ou 112. L'étalonnage se fait au moyen d'une source de signal radio 150, dite source de référence 150, adaptée pour émettre un signal radio dit de référence. La source de référence 150 est disposée à l'extérieur de l'équipement comprenant le réseau d'antenne, à une distance « d », cette distance « d » étant suffisamment grande pour que le signal radio issu de la source de référence 150 puisse être considéré au niveau du réseau d'antennes comme un champ lointain. Dit autrement, le réseau d'antennes doit être dans une zone dite « région de Fraunhofer » par rapport à la source de référence, c'est-à-dire éloignée d'une distance supérieure à l'équivalent de plusieurs longueurs d'ondes du signal radio de référence utilisé. La source de référence 150 est vue depuis le réseau d'antennes sous un angle « θ ». La première solution nécessite que la distance « d » et l'angle « θ » soient constants lors de l'étalonnage, ce qui peut être problématique si l'équipement comprenant le réseau d'antennes est en mouvement. Le signal radio de référence est reçu par chaque antenne, transmis via chaque voie de réception et capté par une unité de mesure 130, cette unité de mesure 130 pouvant possiblement être intégrée dans l'unité de traitement 120. L'unité de mesure 130 est adaptée pour mesurer une différence de gain et/ou de déphasage entre chaque signal électrique capté. L'unité de mesure 130 peut fournir le résultat des mesures à un dispositif de compensation 140 adapté pour modifier en gain et/ou phase chaque voie de réception 110, 111 et 112 afin de compenser les différences de gain et/ou phases mesurées en fonction de l'angle « θ » sous lequel est vue la source de référence 150.

Cette première solution, dite « en mode rayonné », présente les inconvénients suivants :
- une dépendance à une source externe de référence, compliquant la mise en oeuvre de l'étalonnage, surtout pour un équipement comprenant le réseau d'antennes en mouvement,
- la source de référence 150 doit être placée selon un angle « θ » par rapport au réseau d'antennes, cet angle devant être connu et/ou mesurable et fixe durant la phase d'étalonnage, ce qui là encore peut être compliqué,
- la source de référence 150 doit être placée à une certaine distance « d » de l'équipement afin de garantir une émission de la source de référence 150 en champ lointain, cette distance devant là encore être fixe durant la phase d'étalonnage.

Au final, cette première solution d'étalonnage est opérationnellement très contraignante.

Une deuxième solution est illustrée dans la **Fig. 2****.** Cette deuxième solution se distingue de la première solution par l'utilisation d'une source de référence 160 interne en lieu et place de la source de référence 150 externe. Dit autrement, la source de référence 160 est placée dans l'équipement comprenant le réseau d'antennes. Un signal radio de référence émis par la source de référence 160 est injecté dans chaque voie de réception 110, 111 et 113, par exemple au moyen de coupleurs radio 171, 172 et 173. De manière similaire à la première solution, une unité de mesure (non représentée) et un dispositif de compensation (non représenté) permettent de mesurer les différences de gain et/ou phase en sortie des voies de réception et de compenser ceux-ci.

Cette deuxième solution, dite « en mode conduit », présente les inconvénients suivants :
- les antennes 101, 102 et 103 ne sont pas prises en compte lors d'une phase d'étalonnage, le signal de référence étant injecté en sortie de chaque antenne,
- les coupleurs radio 171, 172 et 173 peuvent introduire eux-mêmes des différences en gain et/ou phase en entrée des voies de réception,
- la phase d'étalonnage ne peut pas être réalisée en condition opérationnelle, le signal de référence perturbant le traitement réalisé par l'unité de traitemen

Une autre solution est décrite dans le document US 6 665 545.

Ainsi, il est nécessaire de présenter une solution permettant un étalonnage d'un équipement comprenant un réseau d'antennes, cet étalonnage devant :
- prendre en compte un maximum des éléments constitutifs de la chaîne de réception, à partir de chaque antenne jusqu'à l'unité de traitement,
- être le plus résistant possible face à des erreurs du signal de référence (par ex. mauvais placement ou déplacement de la source de référence externe),
- garantir une autonomie de l'équipement comprenant le réseau d'antennes pour son étalonnage, l'étalonnage pouvant être réalisé en condition opérationnelle possiblement dégradée.

### EXPOSE DE L'INVENTION

L'invention concerne un équipement selon la revendication 1.

Selon un mode de réalisation de l'invention, l'équipement comprend :
- une unité de mesure, adaptée pour capter un signal électrique en sortie de chaque voie de réception et déterminer des paramètres physiques associés audit signal électrique,
- un dispositif de compensation, adapté pour configurer chaque voie de réception en fonction des paramètres physiques associés aux signaux électriques déterminés en sortie des voies de réception.

Selon un mode de réalisation de l'invention, l'équipement comprend :
- un élément diviseur de signal électrique connecté à chaque interface d'entrée, excepté celle connectée à l'antenne prédéterminée, une sortie de l'élément diviseur étant connectée au commutateur connecté à l'interface de sortie correspondant à l'interface d'entrée, l'autre sortie étant connectée à une charge d'adaptation d'impédance prédéterminée,
- un élément diviseur et un commutateur connectés en série, les sorties de l'élément diviseur étant connectées aux entrées du commutateur, et placées en coupure entre la sortie du premier élément diviseur connectée à l'interface de sortie correspondant à l'interface d'entrée et ladite interface de sortie.

L'invention concerne également un procédé d'auto-étalonnage de l'équipement selon la revendication 4.

L'invention concerne également un programme d'ordinateur selon la revendication 5.

L'invention concerne également un support d'enregistrement, possiblement lisible par l'équipement, sur lequel est stocké ledit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement une solution fonctionnelle d'étalonnage d'un équipement comprenant un réseau d'antennes selon un premier mode de réalisation connu,
[Fig. 2] illustre schématiquement une solution fonctionnelle d'étalonnage d'un équipement comprenant un réseau d'antennes selon un deuxième mode de réalisation connu,
[Fig. 3] illustre schématiquement une solution fonctionnelle d'étalonnage d'un équipement comprenant un réseau d'antennes selon un mode de réalisation de l'invention,
[Fig. 4] illustre schématiquement une architecture d'un dispositif d'aiguillage pour une solution d'étalonnage selon un premier mode de réalisation de l'invention,
[Fig. 5] illustre schématiquement une architecture d'un dispositif d'aiguillage pour une solution d'étalonnage selon un deuxième mode de réalisation de l'invention,
[Fig. 6] illustre schématiquement une architecture matérielle d'un équipement pour une solution d'étalonnage selon un mode de réalisation de l'invention.

### EXPOSE DETAILLE DE MODES DE REALISATION

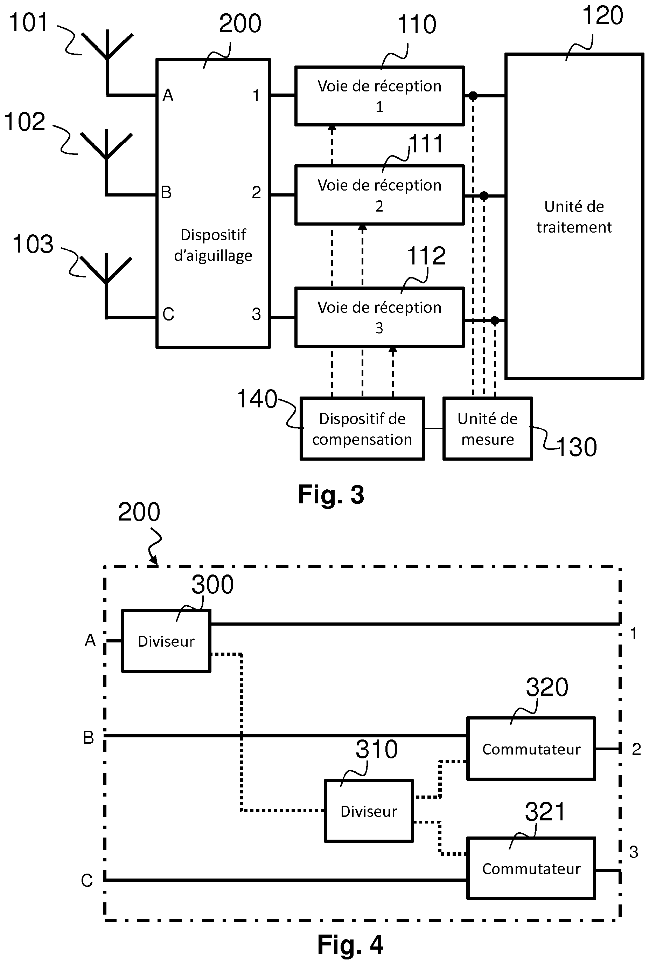

La **Fig. 3** illustre schématiquement une solution fonctionnelle d'étalonnage d'un équipement comprenant un réseau d'antennes 101, 102, 103 selon un mode de réalisation de l'invention.

L'équipement illustré dans la Fig. 3 comprend un réseau d'antennes radioélectriques 101, 102 et 103. Selon le mode de réalisation de l'invention, le réseau d'antennes peut comprendre une pluralité quelconque d'antennes. Chaque antenne 101, 102 et 103 est connectée via au moins une voie de réception 110, 111, 112 associée à l'unité de traitement 120 adaptée pour mettre en oeuvre une technique de formation de faisceaux. L'équipement comprend un dispositif d'aiguillage 200 placé en coupure entre les antennes 101, 102, 103 et les voies de réception 110, 111, 112 associées. L'équipement illustré dans la Fig. 3 se distingue donc de l'équipement illustré dans la Fig. 1 et de l'équipement illustré dans la Fig. 2 par la présence du dispositif d'aiguillage 200 placé en coupure entre les antennes 101, 102 et 103 et les voies de réception 110, 111 et 112. Ainsi, l'antenne 101, respectivement l'antenne 102 ou 103, est connectée à une interface d'entrée « A » du dispositif d'aiguillage 200, respectivement une interface d'entrée « B » ou « C » du dispositif d'aiguillage.

De même, la voie de réception 110, respectivement la voie de réception 111 ou 112, est connectée à une interface de sortie « 1 » du dispositif d'aiguillage 200, respectivement une interface de sortie « 2 » ou « 3 » du dispositif d'aiguillage.

Le dispositif d'aiguillage 200 comprend :
- des interfaces d'entrée (« A », « B » et « C ») en même nombre que les antennes 101, 102, 103, chaque interface d'entrée permettant une connexion d'une antenne,
- des interfaces de sortie (« 1 », « 2 », « 3 ») en même nombre que les voies de réception 110, 111, 112, chaque interface de sortie permettant une connexion d'une voie de réception.

Dit autrement, le dispositif d'aiguillage 200 est placé en coupure entre les antennes et leurs voies de réception associées. Une interface d'entrée du dispositif d'aiguillage 200 correspond alors à une interface de sortie du dispositif d'aiguillage 200 dans le sens où ladite interface d'entrée est connectée à une antenne et ladite interface de sortie est connectée à la voie de réception associée à ladite antenne.

Le dispositif d'aiguillage 200 comprend deux modes de fonctionnement :
- un premier mode de fonctionnement dit opérationnel, chaque interface d'entrée étant alors connectée directement à une interface de sortie différente afin de connecter chaque antenne avec au moins sa voie de réception associée,
- un deuxième mode de fonctionnement dit d'étalonnage, une interface d'entrée correspondant à une antenne prédéterminée étant alors connectée à l'ensemble des interfaces de sortie afin de transmettre le signal électrique issu de l'antenne prédéterminée à l'ensemble des voies de réception.

Ainsi, dans le premier mode de fonctionnement, le fonctionnement du dispositif d'aiguillage 200 est transparent dans le sens où le signal électrique issu de chaque antenne est transmis directement à la voie de réception associée à ladite antenne. Le fonctionnement de l'équipement est dans ce mode de fonctionnement similaire à celui d'un équipement qui ne comprendrait pas de dispositif d'aiguillage, chaque antenne étant directement connectée à sa voie de réception respective.

Dans le deuxième mode de fonctionnement, le signal électrique issu d'une antenne prédéterminée, dite antenne de référence, est distribué sur toutes les voies de réception. Ce signal électrique issu de l'antenne de référence est distribué en lieu et place des signaux reçus par les autres antennes. Chaque voie de réception reçoit alors un même signal électrique issu de la même antenne de référence.

Par même signal électrique, on entend un signal électrique de même phase, mais possiblement de puissance différente. La puissance de chaque signal électrique en sortie des interfaces de sortie du dispositif d'aiguillage peut varier. Le dispositif d'aiguillage 200 peut atténuer de manière différente, mais prédéterminée, le signal électrique reçu de l'antenne de référence en sortie de chacune de ses interfaces de sortie.

L'équipement est adapté pour réaliser un procédé d'étalonnage des voies de réception lorsque le dispositif d'aiguillage est dans le deuxième mode de fonctionnement. Ce procédé d'étalonnage comprend les étapes de :
- basculer le dispositif d'aiguillage dans le deuxième mode de fonctionnement,
- capter un signal électrique en sortie de chaque voie de réception,
- déterminer des paramètres physiques associés audits signaux électriques,
- configurer chaque voie de réception en fonction des paramètres physiques associés aux signaux électriques déterminés en sortie des voies de réception,
- basculer le dispositif d'aiguillage dans le premier mode de fonctionnement.

Dans le deuxième mode de fonctionnement, l'équipement utilise donc comme source d'étalonnage le signal radio reçu par une antenne prédéterminée ou antenne de référence. Le choix de cette antenne est arbitraire parmi la pluralité des antennes du réseau d'antennes.

En absence de signal radio particulier dans l'environnement de l'équipement, le signal radio reçu par chaque antenne du réseau d'antennes est assimilable à un bruit thermique et est différent pour chaque antenne. Il ne serait donc pas possible d'étalonner le réseau d'antennes en utilisant les signaux reçus par chaque antenne, ceux-ci étant différents. Par contre, l'équipement divulgué dans le présent document, en sélectionnant le signal radio d'une seule antenne prédéterminée et en distribuant ce même signal sur toutes les voies de réception permet de garantir l'utilisation d'un signal identique sur chaque voie de réception, et permet donc un étalonnage des voies de réception. Selon un mode de réalisation de l'invention, les antennes du réseau d'antennes sont préalablement étalonnées afin d'avoir des caractéristiques identiques.

En présence d'un signal radio particulier dans l'environnement de l'équipement, chaque antenne peut donc recevoir ce même signal radio. Il n'est toutefois pas possible d'utiliser ce signal radio afin d'étalonner le réseau d'antennes, les caractéristiques de positionnement de la source du signal radio étant inconnues (angle d'incidente « θ » ou distance « d » de la source, cf. Fig. 1).

Ainsi, que ce soit en l'absence ou en présence d'un signal radio, l'équipement divulgué permet de procéder à un auto-étalonnage des voies de réception. La solution ne repose ni sur une source externe (cf. source externe 150 de la Fig. 1), ni sur une source interne (cf. source interne 160 de la Fig. 2), ce qui simplifie l'architecture technique de l'équipement.

Il est à noter que dans le deuxième mode de fonctionnement, le signal radio reçu par l'antenne de référence est transmis *in fine* à l'unité de traitement 120. Cela signifie que dans le deuxième mode de fonctionnement, l'équipement peut continuer à recevoir un signal radio et est donc opérationnel. Seule la mise en oeuvre des techniques de formation de faisceaux n'est pas possible dans le deuxième mode de fonctionnement. Cela présente un avantage par rapport à la solution connue présentée dans la Fig. 2, cette solution utilisant une source de référence interne ne permettant pas de continuer à recevoir un signal radio lors de la phase d'étalonnage, le signal de référence ou d'étalonnage perturbant la réception d'autres signaux radio.

Il est aussi à noter que de façon évidente, la solution présentée dans la Fig. 3 permet de se passer d'une source de référence externe et est donc opérationnellement plus facile à mettre en oeuvre que la solution présentée dans la Fig. 1 avec la source de référence externe 150.

Selon un mode de réalisation de l'invention, l'équipement comprend :
- une unité de mesure 130, adaptée pour capter un signal électrique en sortie de chaque voie de réception et déterminer des paramètres physiques associés audit signal électrique,
- un dispositif de compensation 140, adapté pour configurer chaque voie de réception en fonction des paramètres physiques associés aux signaux électriques déterminés en sortie des voies de réception.

Selon un mode de réalisation alternatif de l'invention, l'unité de traitement 120 intègre l'unité de mesure 130 et/ou le dispositif de compensation 140.

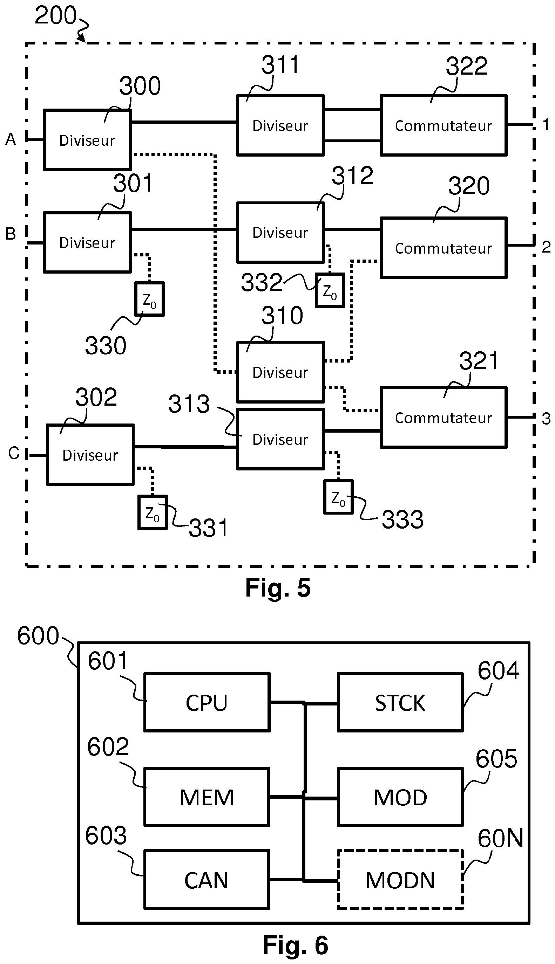

La **Fig. 4** illustre schématiquement une architecture d'un dispositif d'aiguillage 200 pour une solution d'étalonnage selon un premier mode de réalisation de l'invention. Dans cet exemple, ainsi que pour l'exemple illustré ci-après dans la Fig. 5, l'antenne prédéterminée, ou antenne de référence est choisie arbitrairement comme étant connectée sur l'interface d'entrée « A » du dispositif d'aiguillage 200. Le dispositif d'aiguillage 200 peut comprendre en particulier des éléments diviseurs de signal électrique et des commutateurs.

Un élément diviseur de signal électrique - ou diviseur de puissance - comprend trois ports : un port d'entrée et deux ports de sortie. Un élément diviseur de signal électrique permet de diviser la puissance du signal électrique arrivant sur le port d'entrée en la répartissant sur les deux ports de sortie. Ainsi, chaque port de sortie de l'élément diviseur de signal électrique sort un signal électrique similaire au signal électrique appliqué au port d'entrée, la puissance du signal de sortie étant toutefois divisée par deux par rapport à la puissance du signal électrique en entrée de l'élément diviseur de signal électrique. Un élément diviseur de signal électrique est par exemple un « diviseur de Wilkinson ».

Un commutateur comprend une pluralité de ports d'entrée, chaque port d'entrée pouvant recevoir un signal électrique issu d'une source connectée sur ledit port d'entrée, et est adapté pour sélectionner un signal électrique reçu sur l'un des ports d'entrée. Le signal électrique sélectionné, c'est à dire correspondant au port d'entrée sélectionné est redirigé vers un port de sortie. Un commutateur peut par exemple comprendre deux ports d'entrée et un port de sortie. Le commutateur est alors adapté pour rediriger le signal électrique reçu sur l'un ou l'autre des ports d'entrée vers le port de sortie. Dit autrement, le commutateur permet de sélectionner en sortie l'un ou l'autre des signaux électriques reçus en entrée.

Le dispositif d'aiguillage 200 peut ainsi comprendre :
- une chaîne d'éléments diviseurs de signal électrique 300, 310, chaque élément diviseur 300, 310 comprenant une entrée et deux sorties, l'entrée du premier élément diviseur 300 de la chaîne étant connectée à l'interface d'entrée « A » de l'antenne prédéterminée, une sortie du premier élément diviseur étant connectée à l'interface de sortie « 1 » correspondant à l'interface d'entrée « A », la chaîne d'éléments diviseurs 300, 310 étant adaptée pour diviser le signal électrique issu de l'interface d'entrée « A » connectée à l'antenne prédéterminée en autant de signaux électriques que de voies de réception,
- des commutateurs 320, 321, chaque commutateur 320 et 321 comprenant deux entrées et une sortie, les sorties des commutateurs étant connectées à chaque interface de sortie « 2 » et « 3 » (sauf la sortie « 1 » correspondant à la voie de réception de l'antenne prédéterminée), chaque entrée des commutateurs étant connectée à une interface d'entrée « B » et « C » et à un élément diviseur 310 de la chaîne d'éléments diviseurs, l'élément commutateur 320 ou 321 permettant de connecter l'une ou l'autre de ces deux entrées à l'interface de sortie « 2 » ou « 3 ».

Les commutateurs 320 et 321 sont adaptés pour :
o dans le premier mode de fonctionnement, transmettre le signal électrique issu de chaque interface d'entrée « A », « B » et « C » à une interface de sortie « 1 », « 2 » et « 3 », chaque antenne 101, 102, 103 étant alors connectée à sa voie de réception associée 110, 111, 112,
o dans le deuxième mode de fonctionnement, transmettre le signal électrique issu de l'élément diviseur 310, l'antenne prédéterminée étant alors connectée à l'ensemble des voies de réception 110, 111 et 112.

Dans la Fig. 4, le trait en pointillés représente symboliquement le trajet du signal électrique issu de l'antenne de référence connectée à l'interface d'entrée « A » et ayant été « divisé » par le premier élément diviseur 300 et ensuite par le deuxième élément diviseur 310 de la chaîne. Ce signal électrique représenté en pointillés arrive donc en entrée des commutateurs 320 et 321, ces deux commutateurs 320 et 321 étant adaptés pour, dans le deuxième mode de fonctionnement, transmettre ce signal électrique issu de l'élément diviseur 310 aux interfaces de sortie « 2 » et « 3 ».

La **Fig. 5** illustre schématiquement une architecture d'un dispositif d'aiguillage 200 pour une solution d'étalonnage selon un deuxième mode de réalisation de l'invention. Dans cet exemple, ainsi que pour l'exemple illustré précédemment dans la Fig. 4, l'antenne prédéterminée, ou antenne de référence est choisie arbitrairement comme étant connectée sur l'interface d'entrée « A » du dispositif d'aiguillage 200. Selon ce deuxième mode de réalisation, le dispositif d'aiguillage 200 illustré dans la Fig. 4 est perfectionné. Ce perfectionnement comprend :
- un ajout d'un élément diviseur 311 et d'un commutateur 322 en série entre la sortie de l'élément diviseur 300 et de l'interface de sortie « 1 », et,
- un ajout de diviseurs 301, 302, 312 et 313, une sortie de chacun de ces diviseurs 301, 302, 312 et 313 étant connectée à une charge d'adaptation d'impédance prédéterminée 330, 331, 332 et 333.

La valeur de la charge d'adaptation d'impédance prédéterminée 330, 331, 332 et 333 est typiquement celle de l'impédance caractéristique de l'équipement, par exemple 50 Ω.

Ces ajouts d'éléments diviseurs et de commutateurs permettent de garantir que chaque connexion entre une interface d'entrée « A », « B » ou « C » du dispositif d'aiguillage 200 et une interface de sortie « 1 », « 2 » ou « 3 » traversent les mêmes types de composants électroniques dans le premier mode de fonctionnement et dans le deuxième mode de fonctionnement. Ainsi, chaque chaîne de composants électroniques, c'est-à-dire les composants électroniques entre une entrée donnée et une sortie correspondante du dispositif d'aiguillage 200, est identique, que ce soit dans le premier mode de fonctionnement ou dans le deuxième mode de fonctionnement.

Ainsi, dans le cas illustré dans la Fig. 5, et dans le cas du premier mode de fonctionnement :
- un signal électrique arrivant depuis l'interface d'entrée « A » traverse pour atteindre l'interface de sortie « 1 » : le premier élément diviseur 300 de la chaîne d'éléments diviseurs 300 et 310, l'élément diviseur 311 et le commutateur 322,
- un signal électrique arrivant depuis l'interface d'entrée « B » traverse pour atteindre l'interface de sortie « 2 » : l'élément diviseur 301, l'élément diviseur 312 et le commutateur 320, et,
- un signal électrique arrivant depuis l'interface d'entrée « C » traverse pour atteindre l'interface de sortie « 3 » : l'élément diviseur 302, l'élément diviseur 313 et le commutateur 321.

Chaque signal arrivant par un port d'entrée « A », « B » ou « C » traverse donc une chaîne de composants électroniques identique, comprenant deux éléments diviseurs et un commutateur.

De même, dans le cas illustré dans la Fig. 5, et dans le cas du deuxième mode de fonctionnement :
- un signal électrique de référence arrivant depuis l'interface d'entrée « A » traverse pour atteindre l'interface de sortie « 1 » : le premier élément diviseur 300 de la chaîne d'éléments diviseurs 300 et 310, l'élément diviseur 311 et le commutateur 322,
- ce même signal électrique de référence traverse pour atteindre l'interface de sortie «2»: l'élément diviseur 300, l'élément diviseur 310 et le commutateur 320, et,
- ce même signal électrique de référence traverse pour atteindre l'interface de sortie « 3 » : l'élément diviseur 300, l'élément diviseur 310 et le commutateur 321.

Ainsi, le signal issu de l'antenne de référence connectée sur l'interface d'entrée « A » traverse une chaîne de composants comprenant des composants identiques avant d'être distribués sur les différentes voies de réception « 1 », « 2 » et « 3 » , ce qui permet de garantir un équilibrage des possibles perturbations du signal électrique de référence lors de la traversée du dispositif d'aiguillage 200.

Les éléments diviseurs 301 et 302, similaires à l'élément diviseur 300, ainsi que les charges d'adaptations 330 et 331, permettent d'obtenir un équilibrage du gain et des phases entre les différentes voies.

Les exemples donnés dans la Fig. 4 et dans la Fig. 5 sont illustrés pour un réseau d'antennes comprenant trois antennes. Ces exemples ne sont pas limitatifs et peuvent être mis en oeuvre pour des réseaux d'antennes comportant seulement deux antennes, ou au contraire comprenant plus de trois antennes.

Les solutions présentées permettent donc un étalonnage autonome de l'équipement, sans nécessiter de source externe. Cet étalonnage peut être réalisé lorsque l'équipement est opérationnel, la réception d'un signal radio n'étant pas perturbée. Seule une mise en oeuvre de transformation de faisceaux (« beamforming ») est indisponible pendant la durée de l'étalonnage. Ce procédé d'étalonnage peut donc être mis en oeuvre - périodiquement ou à la demande - sans perturber une continuité de service. Le procédé d'étalonnage peut ainsi être déclenché lorsqu'une variation prédéterminée de température interne de l'équipement est détectée.

La **Fig. 6** illustre schématiquement l'architecture matérielle d'un équipement 600 comprenant un réseau d'antennes radioélectriques, chaque antenne étant connectée via au moins une voie de réception associée à une unité de traitement adaptée pour mettre en oeuvre une technique de formation de faisceaux, l'équipement étant caractérisé en ce qu'il comprend un dispositif d'aiguillage placé en coupure entre les antennes et les voies de réception associées. L'équipement est adapté pour exécuter tout ou partie des étapes d'un procédé d'auto-étalonnage. L'équipement 600 peut être l'équipement illustré dans la Fig. 3, cet équipement 600 comprenant le dispositif d'aiguillage 200 précédemment décrit.

Ainsi, le dispositif électronique 600 comprend, reliés par un bus de communication : un processeur ou CPU (« *Central Processing Unit »* en anglais) 601 ; une mémoire MEM 602 de type RAM (« *Random Access Memory »* en anglais) et/ou ROM (« *Read Only Memory »* en anglais), possiblement au moins un convertisseur analogique-numérique CAN 603, un module de stockage STCK 604 de type stockage interne et possiblement une pluralité d'antennes 605 à 60N connectées au convertisseur analogique-numérique CAN 603. Le module de stockage STCK 604 peut être de type disque dur HDD (« *Hard Disk Drive* » en anglais) ou SSD (« *Solid-State Drive »* en anglais), ou de type lecteur de support de stockage externe, tel un lecteur de cartes SD (« *Secure Digital »* en anglais). Le processeur CPU 601 peut enregistrer des données, ou informations, dans la mémoire MEM 602 ou dans le module de stockage STCK 604. Le processeur CPU 601 peut lire des données enregistrées dans la mémoire MEM 602 ou dans le module de stockage STCK 604. Ces données peuvent correspondre à des paramètres de configuration. Le convertisseur analogique-numérique CAN 603 permet la conversion d'un signal électrique analogique issu d'une antenne 605 à 60N en un signal numérique pouvant être traité par le processeur CPU 601 ou par un composant électronique dédié par exemple un microprocesseur dédié au traitement du signal (ou « DSP » pour « Digital Signal Processor » en anglais), un composant dédié au traitement du signal (ou « ASIC » pour « Application Spécifie Integrated Circuit » en anglais) ou encore un composant électronique programmable (ou « FPGA » pour « Field Programmable Gate Array » en anglais).

Le processeur CPU 601 est capable d'exécuter des instructions chargées dans la mémoire MEM 602, par exemple à partir du module de stockage STCK 604. Lorsque l'équipement 600 est mis sous tension, le processeur CPU 601 est capable de lire de la mémoire MEM 602 des instructions et de les exécuter. Ces instructions forment un programme d'ordinateur causant la mise en oeuvre, par le processeur CPU 601, de tout ou partie des procédés et étapes décrits ci-avant, particulièrement le procédé d'auto-étalonnage. Ainsi, tout ou partie des procédés et étapes décrits ci-avant peuvent être implémentés sous forme logicielle par exécution d'un ensemble d'instructions par une machine programmable, telle qu'un DSP (« *Digital Signal Processor »* en anglais) ou un microcontrôleur. Tout ou partie des procédés, étapes ou fonctions décrits ici peuvent aussi être implémentés sous forme matérielle par une machine ou un composant dédié, tel qu'un FPGA (« Field-Programmable Gate Array » en anglais) ou un ASIC (« Application-Specific Integrated Circuit » en anglais).

## Revendications

1. Equipement (600) comprenant un réseau d'antennes radioélectriques (101, 102, 103, 605...60N), chaque antenne étant connectée via au moins une voie de réception associée (110, 111, 112) à une unité de traitement (120) adaptée pour mettre en oeuvre une technique de formation de faisceaux, l'équipement étant **caractérisé en ce qu'**il comprend un dispositif d'aiguillage (200) placé en coupure entre les antennes et les voies de réception associées, le dispositif d'aiguillage comprenant :
- des interfaces d'entrée (A, B, C) en même nombre que les antennes, chaque interface d'entrée permettant une connexion d'une antenne,
- des interfaces de sortie (1, 2, 3) en même nombre que les voies de réception, chaque interface de sortie permettant une connexion d'une voie de réception,
le dispositif d'aiguillage comprenant deux modes de fonctionnement :
- un premier mode de fonctionnement dit opérationnel, chaque interface d'entrée étant alors connectée directement à une interface de sortie différente afin de connecter chaque antenne avec au moins sa voie de réception associée,
- un deuxième mode de fonctionnement dit d'étalonnage, une interface d'entrée correspondant à une antenne prédéterminée étant alors connectée à l'ensemble des interfaces de sortie afin de transmettre le signal électrique issu de l'antenne prédéterminée à l'ensemble des voies de réception,
l'équipement étant adapté pour réaliser un procédé d'étalonnage des voies de réception lorsque le dispositif d'aiguillage est dans le deuxième mode de fonctionnement, **caractérisé en ce que** le dispositif d'aiguillage comporte en outre :
- une chaîne d'éléments diviseurs de signal électrique (300, 310), chaque élément diviseur comprenant une entrée et deux sorties, l'entrée du premier élément diviseur de la chaîne étant connectée à l'interface d'entrée de l'antenne prédéterminée, une sortie du premier élément diviseur étant connectée à l'interface de sortie correspondant à l'interface d'entrée, la chaîne d'éléments diviseurs étant adaptée pour diviser le signal électrique issu de l'interface d'entrée connectée à l'antenne prédéterminée en autant de signaux électriques que de voies de réception,
- des commutateurs (320, 321, 322), chaque commutateur comprenant deux entrées et une sortie, les sorties des commutateurs étant connectées à chaque interface de sortie, sauf celle correspondant à la voie de réception de l'antenne prédéterminée, chaque entrée des commutateurs étant connectée à une interface d'entrée et à un élément diviseur de la chaîne d'éléments diviseurs, l'élément commutateur permettant de connecter l'une ou l'autre de ces deux entrées à l'interface de sortie,
les commutateurs étant adaptés pour :
o dans le premier mode de fonctionnement, transmettre le signal électrique issu de chaque interface d'entrée à au moins une interface de sortie, chaque antenne étant alors connectée à au moins sa voie de réception associée,
o dans le deuxième mode de fonctionnement, transmettre le signal électrique issu de l'élément diviseur, l'antenne prédéterminée étant alors connectée à l'ensemble des voies de réception.

2. Equipement selon la revendication précédente, l'équipement comprenant :
- une unité de mesure (130), adaptée pour capter un signal électrique en sortie de chaque voie de réception et déterminer des paramètres physiques associés audit signal électrique,
- un dispositif de compensation (140), adapté pour configurer chaque voie de réception en fonction des paramètres physiques associés aux signaux électriques déterminés en sortie des voies de réception.

3. Equipement selon la revendication 1 le dispositif d'aiguillage comprenant en outre:
- un élément diviseur de signal électrique (301, 302) connecté à chaque interface d'entrée, excepté celle connectée à l'antenne prédéterminée, une sortie de l'élément diviseur étant connectée au commutateur connecté à l'interface de sortie correspondant à l'interface d'entrée, l'autre sortie étant connectée à une charge d'adaptation d'impédance prédéterminée,
- un élément diviseur et un commutateur connectés en série (311, 322), les sorties de l'élément diviseur étant connectées aux entrées du commutateur, et placées en coupure entre la sortie du premier élément diviseur connectée à l'interface de sortie correspondant à l'interface d'entrée et ladite interface de sortie.

4. Procédé d'auto-étalonnage d'un équipement (600) comprenant un réseau d'antennes radioélectriques (101, 102, 103, 605 ... 60N), chaque antenne étant connectée via au moins une voie de réception associée (110, 111, 112) à une unité de traitement (120) adaptée pour mettre en oeuvre une technique de formation de faisceaux, **caractérisé en ce que** l'équipement comprend un dispositif d'aiguillage (200) placé en coupure entre les antennes et les voies de réception associées, le dispositif d'aiguillage comprenant :
- des interfaces d'entrée (A, B, C) en même nombre que les antennes, chaque interface d'entrée permettant une connexion d'une antenne,
- des interfaces de sortie (1, 2, 3) en même nombre que les voies de réception, chaque interface de sortie permettant une connexion d'une voie de réception,
le dispositif d'aiguillage comprenant deux modes de fonctionnement :
- un premier mode de fonctionnement dit opérationnel, chaque interface d'entrée étant alors connectée directement à une interface de sortie différente afin de connecter chaque antenne avec au moins sa voie de réception associée,
- un deuxième mode de fonctionnement dit d'étalonnage, une interface d'entrée correspondant à une antenne prédéterminée étant alors connectée à l'ensemble des interfaces de sortie afin de transmettre le signal électrique issu de l'antenne prédéterminée à l'ensemble des voies de réception,
l'équipement étant adapté pour réaliser un procédé d'étalonnage des voies de réception lorsque le dispositif d'aiguillage est dans le deuxième mode de fonctionnement,
- une chaîne d'éléments diviseurs de signal électrique (300, 310), chaque élément diviseur comprenant une entrée et deux sorties, l'entrée du premier élément diviseur de la chaîne étant connectée à l'interface d'entrée de l'antenne prédéterminée, une sortie du premier élément diviseur étant connectée à l'interface de sortie correspondant à l'interface d'entrée, la chaîne d'éléments diviseurs étant adaptée pour diviser le signal électrique issu de l'interface d'entrée connectée à l'antenne prédéterminée en autant de signaux électriques que de voies de réception,
- des commutateurs (320, 321, 322), chaque commutateur comprenant deux entrées et une sortie, les sorties des commutateurs étant connectées à chaque interface de sortie, sauf celle correspondant à la voie de réception de l'antenne prédéterminée, chaque entrée des commutateurs étant connectée à une interface d'entrée et à un élément diviseur de la chaîne d'éléments diviseurs, l'élément commutateur permettant de connecter l'une ou l'autre de ces deux entrées à l'interface de sortie,
les commutateurs étant adaptés pour :
o dans le premier mode de fonctionnement, transmettre le signal électrique issu de chaque interface d'entrée à au moins une interface de sortie, chaque antenne étant alors connectée à au moins sa voie de réception associée,
o dans le deuxième mode de fonctionnement, transmettre le signal électrique issu de l'élément diviseur, l'antenne prédéterminée étant alors connectée à l'ensemble des voies de réception,
et **en ce que** le procédé comporte les étapes de :
- basculer le dispositif d'aiguillage dans le deuxième mode de fonctionnement,
- capter un signal électrique en sortie de chaque voie de réception,
- déterminer des paramètres physiques associés auxdits signaux électriques,
- configurer chaque voie de réception en fonction des paramètres physiques associés aux signaux électriques déterminés en sortie des voies de réception,
- basculer le dispositif d'aiguillage dans le premier mode de fonctionnement.

5. Programme d'ordinateur, **caractérisé en ce qu'**il comprend des instructions pour mettre en oeuvre, par un processeur (601) d'un équipement comprenant un réseau d'antennes, un procédé selon la revendication précédente, lorsque le programme d'ordinateur est exécuté par le processeur.

6. Support d'enregistrement sur lequel est stocké le programme d'ordinateur selon la revendication précédente.

## Patentansprüche

1. Einrichtung (600), die eine Funkantennenanordnung (101, 102, 103, 605 ... 60N) umfasst, wobei jede Antenne über mindestens einen zugeordneten Empfangskanal (110, 111, 112) mit einer Verarbeitungseinheit (120) verbunden ist, die dazu angepasst ist, eine Strahlformungstechnik durchzuführen, wobei die Einrichtung **dadurch gekennzeichnet ist, dass** sie eine Weichenvorrichtung (200) umfasst, die unterbrechend zwischen den Antennen und den zugeordneten Empfangskanälen angeordnet ist, wobei die Weichenvorrichtung umfasst:
- Eingangsschnittstellen (A, B, C) in gleicher Anzahl wie die Antennen, wobei jede Eingangsschnittstelle eine Verbindung einer Antenne ermöglicht,
- Ausgangsschnittstellen (1, 2, 3) in gleicher Anzahl wie die Empfangskanäle, wobei jede Ausgangsschnittstelle eine Verbindung eines Empfangskanals ermöglicht,
wobei die Weichenvorrichtung zwei Betriebsarten umfasst:
- eine erste sogenannte operative Betriebsart, wobei jede Eingangsschnittstelle dann direkt mit einer unterschiedlichen Ausgangsschnittstelle verbunden ist, um jede Antenne mit mindestens ihrem zugeordneten Empfangskanal zu verbinden,
- eine zweite sogenannte Kalibrierungsbetriebsart, wobei eine einer vorbestimmten Antenne entsprechende Eingangsschnittstelle dann mit allen Ausgangsschnittstellen verbunden ist, um das aus der vorbestimmten Antenne stammende elektrische Signal an alle Empfangskanäle zu übertragen,
wobei die Einrichtung dazu angepasst ist, ein Verfahren zur Kalibrierung der Empfangskanäle auszuführen, wenn die Weichenanordnung in der zweiten Betriebsart ist, **dadurch gekennzeichnet, dass** die Weichenvorrichtung ferner umfasst:
- eine Teilerelementekette für das elektrische Signal (300, 310), wobei jedes Teilerelement einen Eingang und zwei Ausgänge umfasst, wobei der Eingang des ersten Teilerelements der Kette mit der Eingangsschnittstelle der vorbestimmten Antenne verbunden ist, wobei ein Ausgang des ersten Teilerelements mit der der Eingangsschnittstelle entsprechenden Ausgangsschnittstelle verbunden ist, wobei die Teilerelementekette dazu angepasst ist, das elektrische Signal, das aus der mit der vorbestimmten Antenne verbundenen Eingangsschnittstelle stammt, in ebenso viele elektrische Signale wie es Empfangskanäle gibt zu teilen,
- Umschalter (320, 321, 322), wobei jeder Umschalter zwei Eingänge und einen Ausgang umfasst, wobei die Ausgänge der Umschalter mit jeder Ausgangsschnittstelle verbunden sind, bis auf diejenige, die dem Empfangskanal der vorbestimmten Antenne entspricht, wobei jeder Eingang der Umschalter mit einer Eingangsschnittstelle und mit einem Teilerelement der Teilerelementekette verbunden ist, wobei das Umschalterelement es ermöglicht, den einen oder den anderen dieser beiden Eingänge mit der Ausgangsschnittstelle zu verbinden,
wobei die Umschalter dazu angepasst sind:
o in der ersten Betriebsart das aus jeder Eingangsschnittstelle stammende elektrische Signal an mindestens eine Ausgangsschnittstelle zu übertragen, wobei jede Antenne dann mit mindestens ihrem zugeordneten Empfangskanal verbunden ist,
o in der zweiten Betriebsart das aus dem Teilerelement stammende elektrische Signal zu übertragen, wobei die vorbestimmte Antenne dann mit allen Empfangskanälen verbunden ist.

2. Einrichtung nach dem vorhergehenden Anspruch, wobei die Einrichtung umfasst:
- eine Messeinheit (130), die dazu angepasst ist, ein elektrisches Signal im Ausgang jedes Empfangskanals zu erfassen und physikalische Parameter zu bestimmen, die dem elektrischen Signal zugeordnet sind,
- eine Kompensationsvorrichtung (140), die dazu angepasst ist, jeden Empfangskanal in Abhängigkeit von den den elektrischen Signalen zugeordneten physikalischen Parametern, die im Ausgang der Empfangskanäle bestimmt wurden, zu konfigurieren.

3. Einrichtung nach Anspruch 1, wobei die Weichenvorrichtung ferner umfasst:
- ein Teilerelement für ein elektrisches Signal (301, 302), das mit jeder Eingangsschnittstelle verbunden ist, mit Ausnahme derjenigen, die mit der vorbestimmten Antenne verbunden ist, wobei ein Ausgang des Teilerelements mit dem Umschalter verbunden ist, der mit der der Eingangsschnittstelle entsprechenden Ausgangsschnittstelle verbunden ist, wobei der andere Ausgang mit einer vorbestimmten Impedanzanpassungslast verbunden ist,
- ein Teilerelement und einen Umschalter, die in Reihe verbunden sind (311, 322), wobei die Ausgänge des Teilerelements mit den Eingängen des Umschalters verbunden sind, und unterbrechend zwischen dem Ausgang des ersten Teilerelements, der mit der der Eingangsschnittstelle entsprechenden Ausgangsschnittstelle verbunden ist, und der Ausgangsschnittstelle angeordnet sind.

4. Verfahren zur Selbstkalibrierung einer Einrichtung (600), die eine Funkantennenanordnung (101, 102, 103, 605 ... 60N) umfasst, wobei jede Antenne über mindestens einen zugeordneten Empfangskanal (110, 111, 112) mit einer Verarbeitungseinheit (120) verbunden ist, die dazu angepasst ist, eine Strahlformungstechnik durchzuführen, **dadurch gekennzeichnet, dass** die Einrichtung eine Weichenvorrichtung (200) umfasst, die unterbrechend zwischen den Antennen und den zugeordneten Empfangskanälen angeordnet ist, wobei die Weichenvorrichtung umfasst:
- Eingangsschnittstellen (A, B, C) in gleicher Anzahl wie die Antennen, wobei jede Eingangsschnittstelle eine Verbindung einer Antenne ermöglicht,
- Ausgangsschnittstellen (1, 2, 3) in gleicher Anzahl wie die Empfangskanäle, wobei jede Ausgangsschnittstelle eine Verbindung eines Empfangskanals ermöglicht,
wobei die Weichenvorrichtung zwei Betriebsarten umfasst:
- eine erste sogenannte operative Betriebsart, wobei jede Eingangsschnittstelle dann direkt mit einer unterschiedlichen Ausgangsschnittstelle verbunden ist, um jede Antenne mit mindestens ihrem zugeordneten Empfangskanal zu verbinden,
- eine zweite sogenannte Kalibrierungsbetriebsart, wobei eine einer vorbestimmten Antenne entsprechende Eingangsschnittstelle dann mit allen Ausgangsschnittstellen verbunden ist, um das aus der vorbestimmten Antenne stammende elektrische Signal an alle Empfangskanäle zu übertragen,
wobei die Einrichtung dazu angepasst ist, ein Verfahren zur Kalibrierung der Empfangskanäle auszuführen, wenn die Weichenanordnung in der zweiten Betriebsart ist,
- eine Teilerelementekette für das elektrische Signal (300, 310), wobei jedes Teilerelement einen Eingang und zwei Ausgänge umfasst, wobei der Eingang des ersten Teilerelements der Kette mit der Eingangsschnittstelle der vorbestimmten Antenne verbunden ist, wobei ein Ausgang des ersten Teilerelements mit der der Eingangsschnittstelle entsprechenden Ausgangsschnittstelle verbunden ist, wobei die Teilerelementekette dazu angepasst ist, das elektrische Signal, das aus der mit der vorbestimmten Antenne verbundenen Eingangsschnittstelle stammt, in ebenso viele elektrische Signale wie es Empfangskanäle gibt zu teilen,
- Umschalter (320, 321, 322), wobei jeder Umschalter zwei Eingänge und einen Ausgang umfasst, wobei die Ausgänge der Umschalter mit jeder Ausgangsschnittstelle verbunden sind, bis auf diejenige, die dem Empfangskanal der vorbestimmten Antenne entspricht, wobei jeder Eingang der Umschalter mit einer Eingangsschnittstelle und mit einem Teilerelement der Teilerelementekette verbunden ist, wobei das Umschalterelement es ermöglicht, den einen oder den anderen dieser beiden Eingänge mit der Ausgangsschnittstelle zu verbinden,
wobei die Umschalter dazu angepasst sind:
o in der ersten Betriebsart das aus jeder Eingangsschnittstelle stammende elektrische Signal an mindestens eine Ausgangsschnittstelle zu übertragen, wobei jede Antenne dann mit mindestens ihrem zugeordneten Empfangskanal verbunden ist,
o in der zweiten Betriebsart das aus dem Teilerelement stammende elektrische Signal zu übertragen, wobei die vorbestimmte Antenne dann mit allen Empfangskanälen verbunden ist,
und dadurch, dass das Verfahren die Schritte umfasst:
- die Weichenvorrichtung in die zweite Betriebsart umzuschalten,
- ein elektrisches Signal im Ausgang jedes Empfangskanals zu erfassen,
- physikalische Parameter, die den elektrischen Signalen zugeordnet sind, zu bestimmen,
- jeden Empfangskanal in Abhängigkeit von den den elektrischen Signalen zugeordneten physikalischen Parametern, die im Ausgang der Empfangskanäle bestimmt wurden, zu konfigurieren,
- die Weichenvorrichtung in die erste Betriebsart umzuschalten.

5. Computerprogramm, **dadurch gekennzeichnet, dass** es Anweisungen umfasst, um durch einen Prozessor (601) einer Einrichtung, die eine Antennenanordnung umfasst, ein Verfahren nach dem vorhergehenden Anspruch durchzuführen, wenn das Computerprogramm von dem Prozessor ausgeführt wird.

6. Aufzeichnungsmedium, auf dem das Computerprogramm nach dem vorhergehenden Anspruch gespeichert ist.

## Claims

1. Equipment (600) comprising an array of radio antennas (101, 102, 103, 605 ... 60N), each antenna being connected via at least one associated reception channel (110, 111, 112) to a processing unit (120) adapted to implement a beamforming technique, the equipment being **characterised in that** it comprises a switching device (200) placed as a cutoff between the antennas and the associated reception channels, the switching device comprising:
- input interfaces (A, B, C) in the same number as the antennas, each input interface allowing a connection of an antenna,
- output interfaces (1, 2, 3) in the same number as the reception channels, each output interface allowing a connection of a reception channel,
the switching device comprising two operating modes:
- a first so-called operational operating mode, each input interface then being connected directly to a different output interface in order to connect each antenna with at least its associated reception channel,
- a second so-called calibration operating mode, an input interface corresponding to a predetermined antenna then being connected to all the output interfaces in order to transmit the electrical signal coming from the predetermined antenna to all the reception channels,
the equipment being adapted to implement a method for calibrating the reception channels when the switching device is in the second operating mode, **characterised in that** the switching device further comprises:
- a chain of electrical-signal divider elements (300, 310), each divider element comprising one input and two outputs, the input of the first divider element of the chain being connected to the input interface of the predetermined antenna, an output of the first divider element being connected to the output interface corresponding to the input interface, the chain of divider elements being adapted to divide the electrical signal coming from the input interface connected to the predetermined antenna into as many electrical signals are there are reception channels,
- switches (320, 321, 322), each switch comprising two inputs and one output, the outputs of the switches being connected to each output interface, except for the one corresponding to the reception channel of the predetermined antenna, each input of the switches being connected to an input interface and to a divider element of the chain of divider elements, the switching element making it possible to connect one or other of these two inputs to the output interface,
the switches being adapted for:
o in the first operating mode, transmitting the electrical signal coming from each input interface to at least one output interface, each antenna then being connected at least to its associated reception channel,
o in the second operating mode, transmitting the electrical signal coming from the divider element, the predetermined antenna then being connected to all the reception channels.

2. Equipment according to the preceding claim, the equipment comprising:
- a measuring unit (130), adapted to capture an electrical signal output from each reception channel and to determine physical parameters associated with said electrical signal,
- a compensation device (140), adapted to configure each reception channel according to the physical parameters associated with the electrical signals determined at the output of the reception channels.

3. Equipment according to claim 1, the equipment comprising:
- an electrical-signal divider element (301, 302) connected to each input interface, except for the one connected to the predetermined antenna, an output of the divider element being connected to the switch connected to the output interface corresponding to the input interface, the other output being connected to a predetermined impedance matching load,
- a divider element and a switch connected in series (311, 322), the outputs of the divider element being connected to the inputs of the switch, and placed as a cutoff between the output of the first divider element connected to the output interface corresponding to the input interface and said output interface.

4. Method for the autocalibration of equipment (600) comprising an array of radio antennas (101, 102, 103, 605...60N), each antenna being connected via at least one associated reception channel (110, 111, 112) to a processing unit (120) adapted for implementing a beamforming technique, **characterised in that** the equipment comprises a switching device (200) placed as a cutoff between the antennas and the associated reception channels, the switching device comprising:
- input interfaces (A, B, C) in the same number as the antennas, each input interface allowing a connection of an antenna,
- output interfaces (1, 2, 3) in the same number as the reception channels, each output interface allowing a connection of a reception channel,
the switching device comprising two operating modes:
- a first so-called operational operating mode, each input interface then being connected directly to a different output interface in order to connect each antenna with at least the reception channel thereof,
- a second so-called calibration operating mode, an input interface corresponding to a predetermined antenna then being connected to all the output interfaces so as to transmit the electrical signal transmitting from the predetermined antenna to all the reception channels,
the equipment being adapted for implementing a method for calibrating the reception channels when the switching device is in the second operating mode,
- a chain of electrical-signal divider elements (300, 310), each divider element comprising one input and two outputs, the input of the first divider element of the chain being connected to the input interface of the predetermined antenna, an output of the first divider element being connected to the output interface corresponding to the input interface, the chain of divider elements being adapted to divide the electrical signal coming from the input interface connected to the predetermined antenna into as many electrical signals are there are reception channels,
- switches (320, 321, 322), each switch comprising two inputs and one output, the outputs of the switches being connected to each output interface, except for the one corresponding to the reception channel of the predetermined antenna, each input of the switches being connected to an input interface and to a divider element of the chain of divider elements, the switching element making it possible to connect one or other of these two inputs to the output interface,
the switches being adapted for:
o in the first operating mode, transmitting the electrical signal coming from each input interface to at least one output interface, each antenna then being connected at least to its associated reception channel,
o in the second operating mode, transmitting the electrical signal coming from the divider element, the predetermined antenna then being connected to all the reception channels,
and **in that** the method comprises the steps of:
- switching the switching device into the second operating mode,
- capturing an electrical signal output from each reception channel,
- determining physical parameters associated with said electrical signals,
- configuring each reception channel according to the physical parameters associated with the electrical signals determined at the output of the reception channels,
- switching the switching device into the first operating mode.

5. Computer program, **characterised in that** it comprises instructions for implementing, by a processor (601) of equipment comprising an antenna array, a method according to the preceding claim, when the computer program is executed by the processor.

6. Recording medium whereon the computer program according to the preceding claim is stored.
